# EUROPEAN PATENT APPLICATION

(11) **EP 4 009 055 A1**
(43) Date of publication of application: **08.06.2022**
(21) Application number: 20848399.0
(22) Date of filing: 31.07.2020
(51) Int. Cl.: G01N 35/02

(54) **REAGENT CARTRIDGE**

(30) Priority: 01.08.2019 JP 2019142095
(71) Applicant: Nippon Chemiphar Co., Ltd., Tokyo 101-0032 (JP)
(72) Inventor: TANIMOTO, Norio, Misato-shi, Saitama 341-0005 (JP); UEMURA, Kenji, Misato-shi, Saitama 341-0005 (JP); EGAMI, Mai, Misato-shi, Saitama 341-0005 (JP); MATAKI, Takahiro, Tokyo 101-0032 (JP)
(74) Representative: Viering, Jentschura & Partner mbB Patent- und Rechtsanwälte
(86) International application number: PCT/JP2020/029378
(87) International publication number: WO 2021/020547

(57) **Abstract**

Provided is a reagent cartridge that can reduce the risk of infection caused by an operator touching a sample or the like during dispensation of the sample or handling of the reagent cartridge, can shorten the test time by improving the work efficiency, and can positively perform analysis of the sample.

A reagent cartridge used for an analysis apparatus that analyzes a result based on the reaction of a sample and a reagent includes a sample containing part that contains the sample, a reagent containing part that contains the reagent, and an antibody containing part that contains the antibody, wherein the sample containing part, the reagent containing part, the antibody containing part, and the sample containing part are arranged on the same surface, and the sample containing part includes an injection part and a liquid suction part.

## Description

### Technical Field

The present invention relates to a reagent cartridge used for an analysis apparatus that analyzes a result based on the reaction of a sample, such as blood, and a reagent.

### Background Art

Conventionally, various models are known as analysis apparatuses that analyze the reaction of a sample, such as blood, and a reagent, and for example, an analysis apparatus as shown in Patent Literature 1 is known. The analysis apparatus described in Patent Literature 1 includes one or more test cartridges of an aspect including at least a sample cell containing a sample, a reagent cell containing a reagent, and a reaction cell where the sample and the reagent are made to react, each of the cells being linearly arranged, an apparatus housing including therein a space part for a predetermined set stage and an test stage adjacent to this set stage, a cartridge holding device provided in the set stage, and including a cartridge receiving part holding the one of more test cartridges, a cartridge conveying device provided in the test stage, and while linearly carrying in the test cartridges held in the cartridge holding device to the test stage, and conveying the test cartridges along a longitudinal direction along an arranging direction of each of the cells of the carried test cartridges in the test stage, linearly carrying out the test cartridges after test from the test stage to the set stage to return them to the cartridge receiving part of the cartridge holding device, a sample reagent dispensing device provided in correspondence with a dispensing position that is set in advance in a part of a conveyance path of the test cartridges in the test stage, in a state where a dispensation target cell of the test cartridges in the test stage carried by the cartridge conveying device is conveyed and arranged at the dispensing position, the sample reagent dispensing device dispensing, for the test cartridges, the sample and the reagent of the test cartridges to the reaction cell, a measuring device provided in correspondence with a measuring position that is set in advance in a part of the conveyance path of the test cartridges in the test stage, in a state where the reaction cell of the test cartridges in the test stage conveyed by the cartridge conveying device is conveyed and arranged at the measuring position, the measuring device measuring a reaction of the sample and the reagent in the reaction cell dispensed by the sample reagent dispensing device, a constant temperature bath heated by a heat source, and maintaining at least a liquid temperature in the reaction cell of the test cartridges in the test stage conveyed by the cartridge conveying device to a preset constant temperature environment temperature, a constant temperature bath control device including a temperature detector capable of detecting an internal environment temperature of the test stages, and based on the internal environment temperature detected by the temperature detector, when the internal environment temperature is lower than a predetermined threshold value, controlling a setting temperature of the heat source so as to make the setting temperature of the heat source of the constant temperature bath higher, compared with the case where the internal environment temperature is equal to or more than the threshold value.

According to such an analysis apparatus, since the constant temperature bath is included that maintains the liquid temperature in the reaction cell of the test cartridges at the preset constant temperature environment temperature, after dispensing the sample and the reagent to the reaction cell of the test cartridges, it is possible to effectively prevent deterioration of the measurement accuracy due to changes in the test cartridges and the environmental temperature.

Additionally, as a reagent cartridge handling a sample and a reagent at the same time, for example, a reagent cartridge described in Patent Literature 2 is known, and the reagent holder is configured to include a process tube fixed by a coupling member, and including a hole located in the coupling member, at least one socket arranged in the coupling member, and configured to receive a tip of a disposable pipette, two or three or more reagent tubes arranged under the coupling member, and including respective inlet holes located in the coupling member, and one or two or more receptacles arranged in the coupling member, each of the one or two or more receptacles being configured to receive a complementary container, for example, a reagent tube, inserted from a receiving side of the coupling member.

According to such a reagent cartridge, the reagent cartridge can be used as a single unit configured to contain all of the reagents required to perform sample preparations and the receptacles.

### Citation List

### Patent Literature

Patent Literature 1: Japanese Patent Laid-Open No. 2016-24054
Patent Literature 2: Japanese Patent Laid-Open No. 2013-150634

### Summary of Invention

### Technical Problem

However, the reagent cartridge described in Patent Literature 1 had a problem in that the infection risk or the so-called contamination risk occurs, since a sample may be dropped on the top surface of a reagent cartridge or may drop in other cells during movement of a capillary.

Additionally, when the structure of the reagent cartridge described in Patent Literature 2 is used and applied to the analysis apparatus described in Patent Literature 1 that analyzes the reaction of the sample and the reagent, since it becomes a configuration in which the sample is dispensed to the process tube (sample cell), after inserting a blood collection tool in an aperture of the sample cell and dispensing the sample, a step of removing the blood collection tool from the sample cell is required, and at this time, there was a problem in that the risk of infection may occur because the sample adhering to the tip of the blood collection tool is scattered to the outside of the sample cell or the like, or in that contamination may occur when the sample is mixed in the cell other than the sample cell and the reaction cell.

Therefore, the present invention has been made in order to solve such problems, and an object of the present invention is to provide a reagent cartridge that can reduce the risk of infection or the risk of contamination due to an operator touching a sample or the like during dispensation of the sample or handling of the reagent cartridge.

### Solution to Problem

A reagent cartridge according to the present invention that solves the above problems is a reagent cartridge used for an analysis apparatus that analyzes a result based on a reaction of a sample and a reagent, the reagent cartridge including a sample containing part that contains the sample, wherein the sample containing part includes an injection part and a liquid suction part.

Additionally, in the reagent cartridge according to the present invention, it is preferable when the injection part and the liquid suction part mutually extend in a vertical direction, an inclined surface that is inclined toward the liquid suction part is formed in a lower end of the injection part, and the inclined surface is continuous with the liquid suction part via a side surface of the liquid suction part.

Additionally, in the reagent cartridge according to the present invention, it is preferable when a guide surface that is inclined with respect to the vertical direction is formed in the injection part.

Additionally, in the reagent cartridge according to the present invention, it is preferable when the guide surface is formed in a side wall opposing the liquid suction part.

Additionally, in the reagent cartridge according to the present invention, it is preferable to include a holding part at a predetermined interval from the guide surface.

Additionally, in the reagent cartridge according to the present invention, it is preferable when the inclined surface is inclined at 30 degrees to 60 degrees with respect to the vertical direction.

Additionally, in the reagent cartridge according to the present invention, it is preferable when the inclined surface is continuously formed with a liquid reservoir part so as to form a part of the liquid reservoir part.

Additionally, in the reagent cartridge according to the present invention, it is preferable when a sample dilution solution is contained in the sample containing part.

Additionally, in the reagent cartridge according to the present invention, it is preferable when a liquid surface of the sample dilution solution is located between an upper end and a lower end of the inclined surface.

Additionally, in the reagent cartridge according to the present invention, it is preferable to include at least one of a reagent containing part that contains the reagent, and an antibody containing part that contains an antibody.

Additionally, in the reagent cartridge according to the present invention, it is preferable when the liquid suction part, the reagent containing part and the antibody containing part are substantially arranged on an operation line of the analysis apparatus.

Additionally, in the reagent cartridge according to the present invention, it is preferable when a first closing part that closes at least one of the reagent containing part and the antibody containing part, and in which an air vent hole is formed at a position corresponding to at least one of the reagent containing part and the antibody containing part, and a second closing part that closes the air vent hole are laminated.

Additionally, in the reagent cartridge according to the present invention, it is preferable when the first closing part closes at least one of the liquid suction part or the injection part.

Additionally, in the reagent cartridge according to the present invention, it is preferable when a second air vent hole is formed at a position corresponding to the liquid suction part in the first closing part.

Additionally, in the reagent cartridge according to the present invention, it is preferable when a second air vent hole is formed at a position corresponding to the injection part in the first closing part.

### Advantageous Effects of Invention

According to the present invention, since the sample containing part includes the injection part and the liquid suction part, the injection and liquid suction of the sample can be performed at separate locations, and therefore, the liquid suction can be performed without removing the pipette tip at the tip of the blood collection tool from the injection part after the injection of the sample, and the risk of infection or the risk of contamination due to removal of the blood collection tool can be reduced.

### Brief Description of the Drawings

[FIG. 1] FIG. 1 is a perspective view of an analysis apparatus that uses a reagent cartridge according to a first embodiment of the present invention.
[FIG. 2] FIG. 2 is a perspective view of the reagent cartridge according to the first embodiment of the present invention.
[FIG. 3] FIG. 3 is an A-A cross-sectional view in FIG. 2.
[FIG. 4] FIG. 4 is a partial exploded view of the reagent cartridge according to the first embodiment of the present invention.
[FIG. 5] FIG. 5 is a perspective view of a sample collection pipette used when dispensing a sample of the reagent cartridge according to the first embodiment of the present invention.
[FIG. 6] FIG. 6 is a cross-sectional view showing a state of dispensing the sample to the reagent cartridge according to the first embodiment of the present invention.
[FIG. 7] FIG. 7 is a cross-sectional view showing a state of taking out an antibody and a reagent from the reagent cartridge according to the first embodiment of the present invention.
[FIG. 8] FIG. 8 is a cross-sectional view of a sample containing part of a reagent cartridge according to a second embodiment of the present invention.
[FIG. 9] FIG. 9 is a cross-sectional view showing a state of dispensing a sample to the reagent cartridge according to the second embodiment of the present invention.
[FIG. 10] FIG. 10 is a cross-sectional view of a sample containing part of a reagent cartridge according to a third embodiment of the present invention.
[FIG. 11] FIG. 11 is a cross-sectional view showing a state of dispensing a sample to the reagent cartridge according to the third embodiment of the present invention.
[FIG. 12] FIG. 12 is a cross-sectional view along a center line M of a sample containing part of a reagent cartridge according to a fourth embodiment of the present invention.

### Description of Embodiments

Hereinafter, a reagent cartridge according to the present invention will be described with reference to the drawings. Note that the following embodiments do not limit the invention according to each claim, and not all combinations of features described in the embodiments are necessarily essential to the solution of the invention.

Note that the reagent cartridge provided by the present invention relates to a reagent cartridge used for an analysis apparatus that analyzes a result based on the reaction of a sample, such as blood, and a reagent. Additionally, the reagent cartridge provided by the present invention may be a reagent cartridge used for the analysis apparatus that analyzes the result based on the reaction of the sample, such as blood, and the reagent, and although the target of analysis is not particularly limited, as one implementation, the reagent cartridge provided by the present invention relates to a reagent cartridge used for an allergy test (a test for checking the presence of specific allergy). Additionally, as another implementation, the reagent cartridge provided by the present invention relates to a reagent cartridge used for a blood test, such as measurement of hemoglobin A1c concentration in blood. In addition, as another implementation, the reagent cartridge provided by the present invention relates to a reagent cartridge used for a genetic test. Further, although the analysis aspect of the result based on the reaction of the sample, such as blood, and the reagent in the present invention may be an aspect that can be analyzed, and is not particularly limited, as one implementation, a reagent cartridge used for an allergy test relates to the analysis that, in order to detect the presence of an antibody that specifically binds to a specific allergen (antigen) in the sample such as blood, detects the presence of light emission based on an antibody (hereinafter, a labeled antibody) labeled with a biologically active substance that has specific binding ability to the antibody, and has enzymatic activity. Further, the light emission of the labeled antibody relates to, for example, an analysis that dispenses a luminescent substrate, thereby causing the substrate to emit light to be visualized by the chemical reaction catalyzed by the labeled antibody (for example, an anti-IgE antibody labeled with an enzyme). Additionally, this analysis of visualizing relates to, for example, an analysis of measuring the intensity of the light emission by letting the chemical reaction take place for a predetermined period under a predetermined environmental condition. Note that the "a reagent" in the present specification is a reagent for a reaction required for detection, and is, for example, a labeled antibody, a luminescent substrate, and the like. The reagent may be a reagent required for a reaction, and is not particularly limited to these specific examples.

### [First Embodiment]

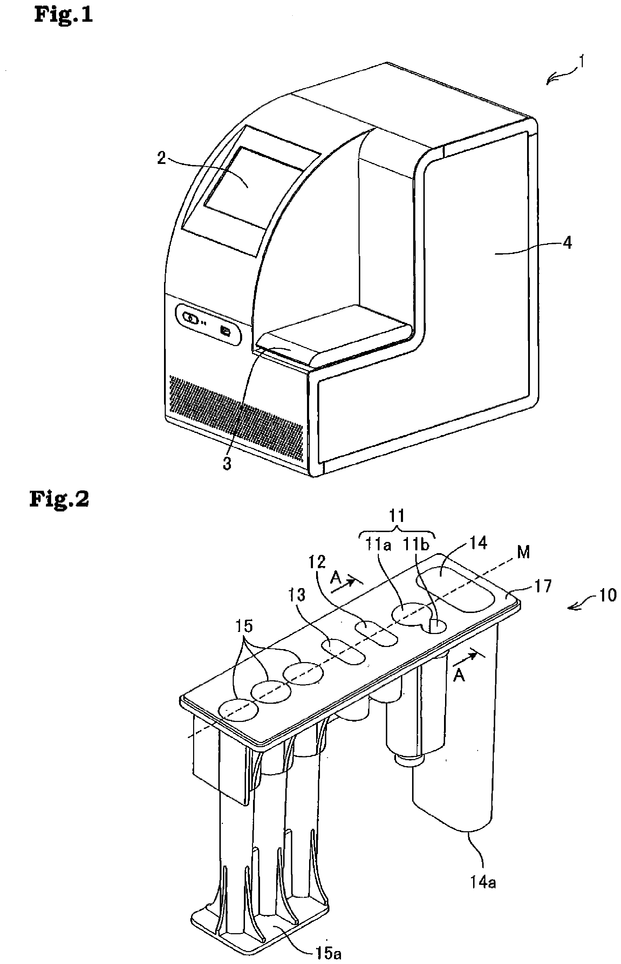

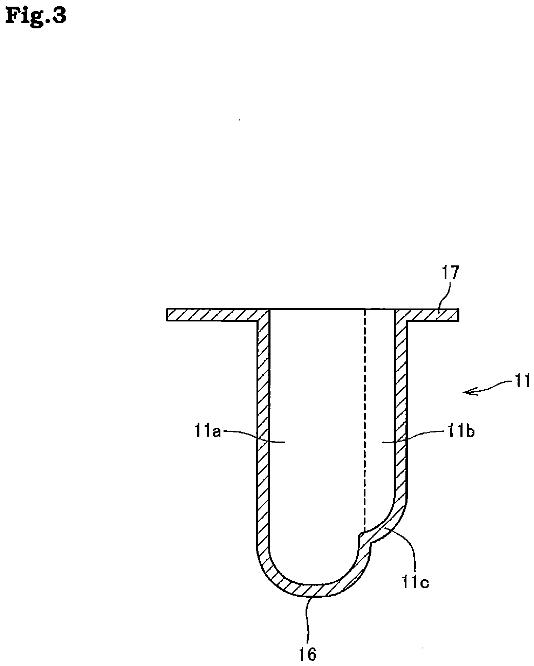

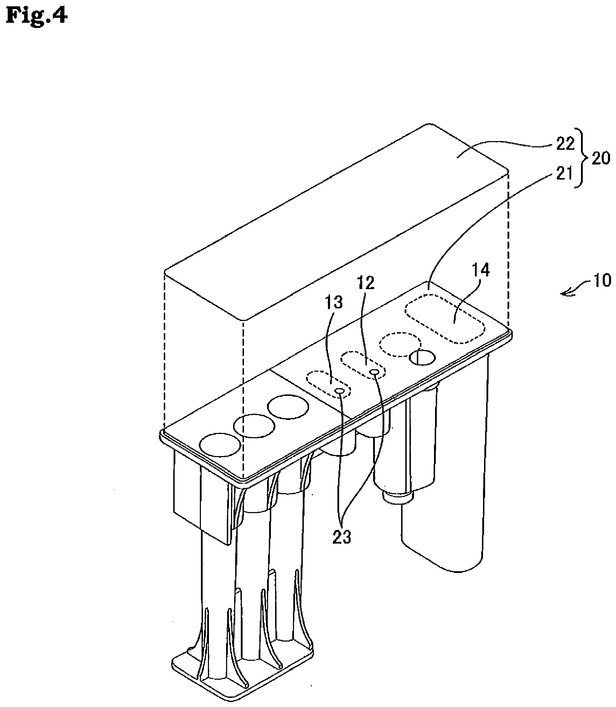

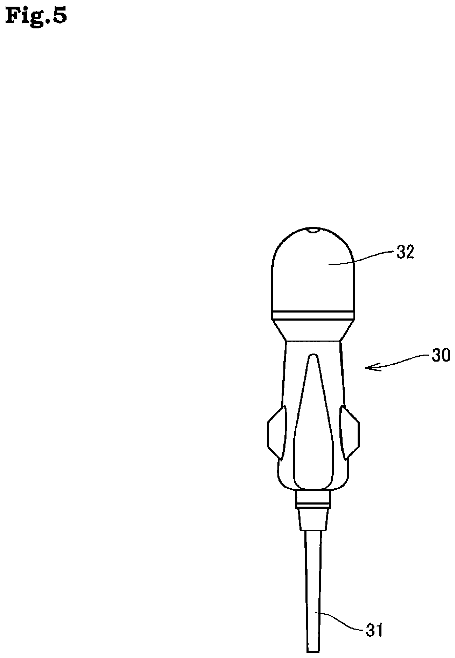

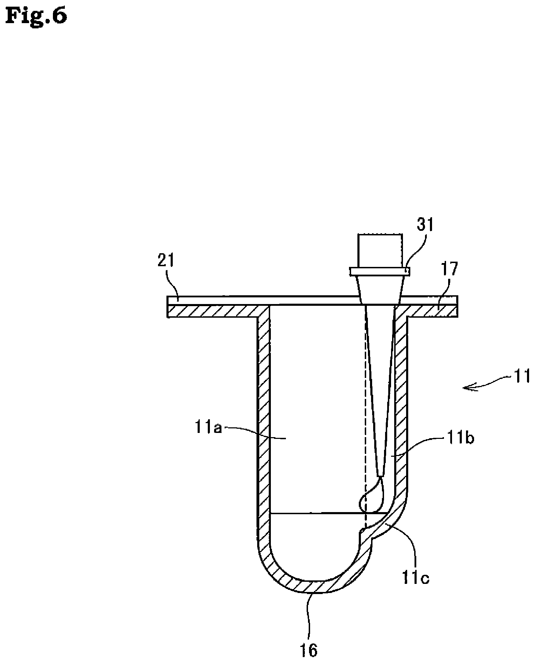

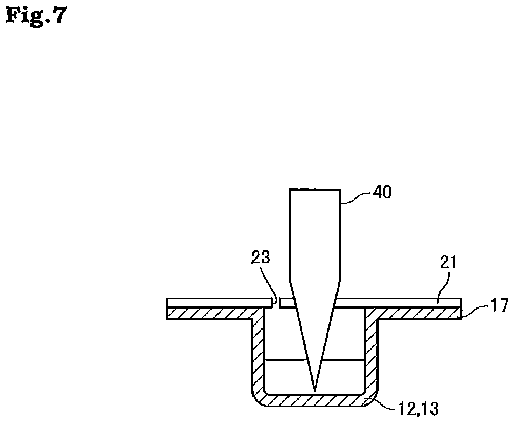

FIG. 1 is a perspective view of an analysis apparatus that uses a reagent cartridge according to a first embodiment of the present invention, FIG. 2 is a perspective view of the reagent cartridge according to the first embodiment of the present invention, FIG. 3 is an A-A cross-sectional view in FIG. 2, FIG. 4 is a partial exploded view of the reagent cartridge according to the first embodiment of the present invention, FIG. 5 is a perspective view of a sample collection pipette used when dispensing a sample of the reagent cartridge according to the first embodiment of the present invention, FIG. 6 is a cross-sectional view showing a state of dispensing the sample to the reagent cartridge according to the first embodiment of the present invention, and FIG. 7 is a cross-sectional view showing a state of taking out an antibody and a reagent from the reagent cartridge according to the first embodiment of the present invention.

As shown in FIG. 1, the reagent cartridge according to the present embodiment is loaded to an analysis apparatus 1, in order to analyze a result based on the reaction of a sample dispensed in the reagent cartridge and a reagent. The analysis apparatus 1 includes a housing 4 including an operation panel 2, a reagent cartridge 10, and an installation door 3 that closes an input part for installing a reaction cell in a freely opened and closed manner.

In the analysis apparatus 1, the installation door 3 is opened, and the reaction cell and the reagent cartridge 10 are set to a moving table, which is not shown, from the input part. Then, a chip 40 stored in the reagent cartridge 10 is fit to the tip of a dispensing nozzle, and the sample, the reagent, and the like are sucked from the reagent cartridge 10. Additionally, the sample, the reagent, and the like that have been sucked are dispensed to the reaction cell.

After the dispensing step is completed, the moving table is reciprocated to timely stir and react the sample, an antibody (an antibody having specific binding ability to the sample, an antibody labeled with a biologically active substance that has enzymatic activity, and the like can be listed), the reagent, and a washing solution. After stirring, drainage of the dispensed sample and the like are performed, and a detection camera is placed close to the reaction cell to shade, so as to prevent the outside light from entering from the outside of the reaction cell and a test apparatus. In this state, by detecting the presence of light emission of an antibody (hereinafter, a labeled antibody) labeled with a biologically active substance that has specific binding ability to the sample, and has enzymatic activity, it is possible to detect the presence of an allergic reaction. Specifically, since the light emission of the labeled antibody is visualized by dispensing the reagent (luminescent substrate), thereby causing the substrate to emit light by the chemical reaction catalyzed by the labeled antibody (in the present embodiment, an anti-IgE antibody labeled with an enzyme), the intensity of the light emission is measured by the detection camera by letting the chemical reaction take place for a predetermined period under a predetermined environmental condition.

Here, as one implementation, the sample is discharged to a sample containing part, and the labeled antibody is contained in an antibody containing part. In this case, for example, after the sucked sample is dispensed and stirred in the reaction cell, and is drained through a cleaning process, the labeled antibody is dispensed to the reaction cell, and is stirred to react, and cleaning and drainage are performed.

Additionally, as another implementation different from the previously-described implementation, it is possible to omit the antibody containing part, by containing the labeled antibody in the sample containing part in advance. In this case, for example, the labeled antibody is contained in the sample containing part in advance, the sample and the labeled antibody that have been made to react in the sample containing part is dispensed and stirred in the reaction cell, and cleaning and drainage are performed.

Here, the reaction cell may be a reaction cell in which the sample and the reagent can be made to react, and the shape, the structure, the material, and the like are not particularly limited. Additionally, the reaction cell may be configured to be contained in a so-called cassette.

Additionally, although the biologically active substance with enzyme activity to label the antibody having specific binding ability to the sample can use a biologically active substance of the prior art, and is not particularly limited, the enzymes shown below can be used. For example, there are alkaline phosphatase, beta-galactosidase, glucose oxidase, urease, creatine kinase, uricase, glucose 6-phosphate dehydrogenase, peroxidase, and the like.

Additionally, although the luminescent substrate can use a luminescent substrate of the prior art, and is not particularly limited, the substrate shown below can be used. For example, there are acridinium salts, dioxetanes, luciferin, lucigenin, oxalyl chloride, and the like.

In addition, although the reagent cartridge according to the present embodiment has been described in the mode in which the light emission is measured by using the labeled antibody labeled with the biologically active substance having enzyme activity, and the luminescent substrate, the reagent cartridge according to the present embodiment can be used for the other measurements. For example, fluorescence can also be used for measurement, by using the labeled antibody that uses a fluorescent substrate (fluorescence dye molecule) instead of the biologically active substance with enzyme activity as the material for labeling the labeled antibody.

Specifically, fluorescence can be used for measurement by discharging the sample to the sample containing part, and containing the labeled antibody in the antibody containing part, or by discharging the sample to the sample containing part in which the labeled antibody is contained in advance. Note that, at this time, when a fluorescent Substrate (fluorescence dye molecule) is used for the material for labeling the antibody, a reagent containing part can be omitted. Further, it becomes possible to also omit the antibody containing part by containing the labeled antibody in the sample containing part in advance. For example, after the sucked sample is dispensed and stirred in the reaction cell, and is drained through the cleaning process, the labeled antibody is dispensed to the reaction cell, and is stirred to react, and cleaning and drainage are performed. Alternatively, the labeled antibody is contained in the sample containing part in advance, the sample and the labeled antibody that have been made to react in the sample containing part is dispensed and stirred in the reaction cell, and cleaning and drainage are performed. Then, detection is performed by shading so as to prevent the outside light from entering the reaction cell by using an excitation antigen, a spectroscope, a fluorescence detector, and the like instead of the detection camera, and causing the fluorescent substrate to be fluorescent by illuminating the fluorescent substrate with light having a wavelength for exciting the fluorescent substrate.

Next, the reagent cartridge 10 according to the present embodiment will be described. As shown in FIG. 2, the reagent cartridge 10 according to the present embodiment includes a sample containing part 11 where the sample is dispensed and contained, an antibody containing part 12 containing the antibody, a reagent containing part 13 containing the reagent, a washing solution containing part 14 containing a washing solution, and chip containing parts 15 containing a plurality of chips. Note that it is preferable when the reagent cartridge 10 is configured as a molded product with a synthetic resin, such as polypropylene or polyethylene, and in this case, it is preferable when the sample containing part 11, the antibody containing part 12, the reagent containing part 13, the washing solution containing part 14, and the chip containing parts 15 are configured in one piece.

The washing solution containing part 14, the sample containing part 11, the antibody containing part 12, the reagent containing part 13, and the chip containing parts 15 are arranged along the longitudinal direction on a substantially rectangular-shaped top surface part 17. At this time, it is preferable when the washing solution containing part 14, the sample containing part 11, the antibody containing part 12, the reagent containing part 13, and the chip containing parts 15 are substantially arranged on an operation line of the analysis apparatus. In the present embodiment, they are arranged on the substantially same straight line along a substantially center line M of the width direction of the top surface part 17, so as to be along the operation line along which the moving table is reciprocated. Additionally, the washing solution containing part 14, the sample containing part 11, the antibody containing part 12, the reagent containing part 13, and the chip containing parts 15 are each formed in a bottomed cylindrical tubular shape extending in the vertical direction from the top surface part 17.

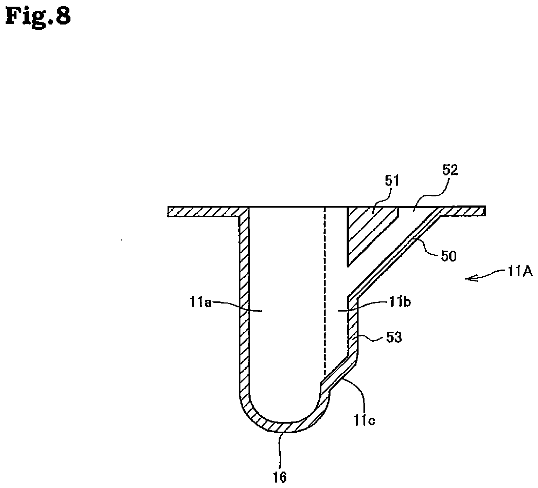

The sample containing part 11 includes a liquid suction part 11a arranged on the center line M (substantially the operation line of the analysis apparatus), and an injection part 11b arranged close to the liquid suction part 11a. The liquid suction part 11a and the injection part 11b are continuous with each other in either vertical direction, and in the reagent cartridge 10 in the present embodiment, the liquid suction part 11a and the injection part 11b extend in continuity with each other along the vertical direction by being arranged to overlap with each other, and an aperture formed in the top surface part 17 is formed into a substantially gourd shape (the contour shape of figure 8) .

Additionally, as shown in FIG. 3, the sample containing part 11 is formed by extending each of the liquid suction part 11a and the injection part 11b in the vertical direction. The liquid suction part 11a is formed to be longer than the injection part 11b, and a substantially hemispherical liquid reservoir part 16 is formed in the bottom of the liquid suction part 11a.

In addition, the injection part 11b extends in the vertical direction along the liquid suction part 11a, and an inclined surface 11c continuous with a side surface of the liquid suction part 11a is formed in a lower end. Although the inclined surface 11c may be any shape as long as the sample dispensed to the injection part 11b smoothly flows into the liquid reservoir part 16, it is preferable when the inclined surface 11c is formed into an arc shape in cross section or a linear shape. It is more preferable when the inclined surface 11c is formed into a linear shape, and when forming the inclined surface 11c into the linear shape, it is preferable when the inclined surface 11c is formed to be inclined toward the liquid reservoir part 16, the inclination angle is preferably 30 degrees to 60 degrees, and a preferred angle is substantially 45 degrees. Further, it is more preferable when the inclined surface 11c is formed in a linear shape continuous with the liquid reservoir part 16, so as to form a part of the liquid reservoir part 16. At this time, the inclined surface 11c may be formed from substantially the lower end of the liquid reservoir part 16. Note that it is preferable when a sample dilution solution is contained in the sample containing part 11 in advance. The amount of the sample used can be reduced by diluting the sample. Additionally, in the case of a sample with a certain degree of viscosity, such as blood, it can contribute to uniform spreading on the reaction cell, and can contribute to evenly performing the reaction of the sample and a material on the reaction cell, such as an antigen. Here, the sample dilution solution may be able to dilute the sample, and the prior art can be used. Therefore, although not particularly limited, for example, a physiological saline solution, a buffer having a buffering capacity of pH 6 to 9, or the so-called good buffer can be used. Additionally, heparin or the like may be included in the sample dilution solution.

As shown in FIG. 2, the antibody containing part 12 and the reagent containing part 13 are tubular parts extending in the vertical direction and having oval shapes in cross section, and although their vertical direction lengths can be appropriately changed depending on the amounts of the antibody and the reagent contained, the vertical direction lengths are generally formed shorter than the sample containing part 11, the washing solution containing part 14, and the chip containing parts 15.

Although similar to the antibody containing part 12 and the reagent containing part 13, the washing solution containing part 14 is a tubular member extending in the vertical direction and having an oval shape in cross section, its volume is configured to be greater than those of the antibody containing part 12 and the reagent containing part 13.

The chip containing parts 15 are formed to be able to contain a plurality of chips 40 shown in FIG. 7, and are configured to be able to contain a required number of chips 40. Additionally, in the lower ends of the chip containing parts 15, the lower ends of all of the chip containing parts 15 are connected by a coupling plate 15a. Further, the coupling plate 15a and a bottom 14a of the washing solution containing part 14 are horizontally configured so that they may be mutually located on the same surface, and when the reagent cartridge 10 is placed on a working table, such as a desk, it is possible to prevent the reagent cartridge 10 from falling over, and to hold the reagent cartridge 10 to be able to stand on its own.

Additionally, as shown in FIG. 4, in the reagent cartridge 10 according to the present embodiment, the antibody, the reagent, and the washing solution are contained in advance in the antibody containing part 12, the reagent containing part 13, and the washing solution containing part 14, respectively, and a closing part 20 is attached to the top surface part 17 so that these antibody, reagent, and washing solution are not leaked at the time of transportation and the like.

The closing part 20 is attached to the top surface part 17, and includes a first closing part 21 in which air vent holes 23 are formed at the positions corresponding to the antibody containing part 12 and the reagent containing part 13, and a second closing part 22 laminated on the first closing part 21 so as to close the air vent holes 23 of the first closing part 21. It is preferable when the first closing part 21 and the second closing part 22 are configured by a membrane film material, and they are attached to each other with an adhesive or the like.

Next, referring to FIGS. 5 to 7, a description will be given of the dispensation of the sample to the reagent cartridge 10, and a liquid suction method of the sample, the antibody, and the reagent. A sample collection pipette 30 as shown in FIG. 5 is preferably used for the dispensation of the sample to the reagent cartridge 10. As such a pipette, for example, Japanese Patent No. 5909470 and Japanese Patent No. 5730695 can be listed.

The sample collection pipette 30 includes a pipette tip 31 for performing liquid suction/discharging and holding of the sample, and a nipple 32 made of an elastic body, such as rubber, for performing suction at the time of the liquid suction of the sample. The sample is, for example, sucked through the pipette tip 31 by capillary action, collected, and held in the pipette tip 31.

The sample collected in this manner is dispensed to the sample containing part 11 by inserting the pipette tip 31 into the injection part 11b while breaking through the first closing part 21, after peeling off the second closing part 22 of the reagent cartridge 10 as shown in FIG. 6. At this time, the sample held in the pipette tip 31 flows out into the injection part 11b by pressing the nipple 32. Since the injection part 11b is formed shorter than the liquid suction part 11a, and the inclined surface 11c is formed in the lower end, all of the sample that has flowed out of the pipette tip 31 is stored in the liquid reservoir part 16 along the inclined surface 11c. Additionally, although the case has been shown where the injection part 11b is sealed in the first closing part 21, the injection part 11b may be opened in advance in the first closing part 21 as shown in FIG. 4. Accordingly, an operator can more easily discharge the collected sample to the sample containing part 11.

At this time, when the sample held in the pipette tip 31 is discharged into the injection part 11b, although the sample is dropped as shown in FIG. 6, when the sample dilution solution is contained in advance in the sample containing part 11, it is possible to make the droplet of the sample reach the sample dilution solution before being separated from the tip of the pipette tip 31, and the sample can be positively discharged to the sample containing part 11. Alternatively, it is possible to make the droplet of the sample reach the inclined surface that is inclined toward the liquid suction part 11a formed in the lower end of the injection part 11b, before the droplet of the sample is separated from the tip of the pipette tip 31, and the droplet can be positively discharged to the sample containing part 11 via the sample dilution solution. Then, for example, it is possible to stir the sample and the sample dilution solution by shaking the cartridge itself.

Additionally, it is preferable to keep the liquid surface of the sample dilution solution and the tip of the pipette tip 31 separated from each other, and specifically, it is preferable that the separation distance is a distance that can reduce the risk of the sample dilution solution flowing backward to the pipette tip 31 since the tip of the pipette tip 31 reaches the sample dilution solution, and that can make the discharged sample (droplet) reach the sample dilution solution, and can normally stir the sample into the sample dilution solution. For example, the allowable range for the separation distance is 5.8 to 9.8 mm, a preferable range is 6.8 to 8.8 mm, and a more preferable length is 7.6 to 8.0 mm.

Additionally, when the pipette tip 31 is inserted into the injection part 11b, the length of the pipette tip 31 in the reagent cartridge 10 may be long enough to prevent the sample from being scattered at the time of the discharge of the sample, and the stirring of the sample and the sample dilution solution.

Additionally, when the sample has a certain degree of viscosity, such as blood, the liquid volume of the sample dilution solution contained in the sample containing part 11 may be enough to be evenly spread on the reaction cell. In addition, it is preferable that the liquid surface of the sample dilution solution is between the upper end and the lower end of the inclined surface that is inclined toward the liquid suction part 11a formed in the lower end of the injection part 11b, when the reagent cartridge 10 is rested in a standing position in the vertical direction.

Additionally, Although the sample collection pipette 30 can be kept in the injection part 11b after discharging the sample, when a main body unit, which includes the nipple 32, and the pipette tip 31, which is a tip part, can be detached (separated), it is also possible to keep only the pipette tip 31 in the injection part 11b as shown in FIG. 6.

Next, in the liquid suction of the sample, the dispensing nozzle of the analysis apparatus 1 takes out the chip 40 from the chip containing part 15 of the reagent cartridge 10, fits the chip 40 to the tip of the dispensing nozzle, and inserts the chip 40 into the liquid suction part 11a so as to break through the first closing part 21, thereby moving the tip of the chip 40 to a position at which the sample stored in the liquid reservoir part 16 can be sucked, and performing liquid suction. At this time, since the bottom is formed into the hemispherical or conical shape in the liquid reservoir part 16, it becomes possible to efficiently perform liquid suction of the sample in the liquid reservoir part 16.

Next, referring to FIG. 7, a suction method of the antibody and the reagent will be described. Similar to the above-described suction method of the sample, the suction method of the antibody and the reagent is performed by fitting the chip 40 to the dispensing nozzle of the analysis apparatus 1. At this time, respective separate chips 40 are used for suction of the antibody and the reagent. Therefore, only a required number of the chips 40 required for suction of the sample, the antibody, and the reagent are contained in the chip containing parts 15. Note that, after suction, after the sample, the antibody, and the reagent are dispensed to the analysis apparatus 1 (the reaction cell), the used chips 40 are contained again in the chip containing parts 15, and are discarded at the same time of discarding of the reagent cartridge 10.

The antibody and the reagent are contained in advance in the reagent cartridge 10, and are sealed by the closing part 20. However, at the time of suction of the antibody and the reagent, when the chip 40 is inserted by breaking through the closing part to perform liquid suction, the internal pressure of the antibody containing part 12 and the reagent containing part 13 is increased by the sealing action of the closing part 20, which may inhibit the liquid suction of the antibody and the reagent. In order to prevent this, in the reagent cartridge 10 according to the present embodiment, the first closing part 21 is attached in which the air vent holes 23 are formed at the positions corresponding to the antibody containing part 12 and the reagent containing part 13, and even when the chips 40 are inserted into the antibody containing part 12 and the reagent containing part 13 by braking through the first closing part 21, since an increase in the internal pressure of the antibody containing part 12 and the reagent containing part 13 can be suppressed by the air vent holes 23, it becomes possible to perform smooth liquid suction of the antibody and the reagent. Note that the air vent hole 23 may be provided in the position corresponding to the liquid suction part 11a. By providing the air vent hole 23 for the liquid suction part 11a, it can contribute to the smooth discharging of the sample from the sample collection pipette 30. Additionally, the second closing part 22 is attached for preventing the antibody and the reagent from leaking out from the air vent holes 23 during transportation and handling of the reagent cartridge 10, and is removed in advance at the time of injection of the sample as described above. Additionally, in the present embodiment, although the case has been described where the first closing part 21 and the second closing part 22 are laminated in the closing part 20, the closing part 20 may not be formed by laminating layers, but may be formed in a single layer.

According to such reagent cartridge 10, it is possible to reduce the risk of infection caused by an operator touching the sample and the like during the dispensation of the sample or the handling of the reagent cartridge in allergy tests. Additionally, since the dispensing of the sample from the liquid suction part 11a can be performed with the pipette tip 31 for dispensing the sample inserted into the injection part 11b, and by containing the used chips 40 in the chip containing parts 15, the pipette tip 31 and the chips 40 can be discarded at the same time when the reagent cartridge 10 is discarded after completing the analysis by the analysis apparatus 1, it becomes also possible to reduce the infection risk caused by touching these. Note that it becomes possible to further prevent the infection risk with a configuration in which a removable lid member can be attached so as to cover the top surface part 17 of the reagent cartridge 10 at the time of discarding of the reagent cartridge 10.

### [Second Embodiment]

The case has been described where, in the reagent cartridge 10 according to the above-described first embodiment, the pipette tip 31 is inserted along the extending direction of the injection part 11b at the time of dispensation. In a reagent cartridge of a second embodiment, which will be described next, an example will be described in which a sample containing part 11A has a different form from that in the first embodiment. Note that the members that are the same as or similar to those in the above-described first embodiment will be denoted by the same signs, and a description will be omitted.

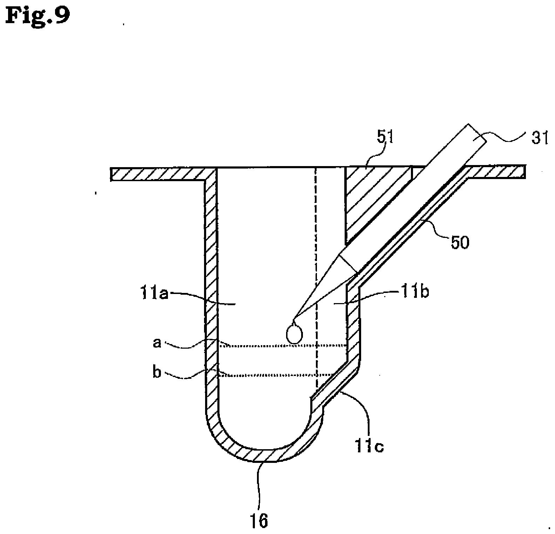

FIG. 8 is a cross-sectional view of a sample containing part of the reagent cartridge according to the second embodiment of the present invention, and FIG. 9 is a cross-sectional view showing a state of dispensing a sample to the reagent cartridge according to the second embodiment of the present invention.

As shown in FIG. 8, the sample containing part 11A according to the present embodiment is characterized by the form of the injection part 11b. Similar to the above-described reagent cartridge 10 according to the first embodiment, although in the sample containing part 11A according to the present embodiment, the liquid suction part 11a and the injection part 11b are formed to mutually extend in the vertical direction, a guide surface 50 extending in an inclined direction from a side wall opposing the injection part 11b is formed in the liquid suction part 11a. Additionally, a holding part 51 is formed at a predetermined interval from the guide surface 50, and a pipette tip insertion path 52 is formed between the guide surface 50 and the holding part 51.

Additionally, the lower end of the injection part 11b includes an inclined surface 11c that is inclined at an angle of substantially 45 degrees to the vertical direction. In this manner, since the inclined surface 11c of the lower end of the injection part 11b is inclined at an angle of substantially 45 degrees, the reagent cartridge according to the present embodiment can more optimally perform the stirring of a sample and a sample dilution solution in a case where the reagent cartridge is stirred after discharging of the sample. Note that, although the inclined surface 11c may be formed to be inclined, the inclination angle is preferably 30 to 60 degrees, and a preferable angle is substantially 45 degrees.

In the sample containing part 11A of the reagent cartridge according to the present embodiment formed in this manner, the sample collected by the pipette tip 31 can be discharged to the sample containing part 11A, by inserting the pipette tip 31 into the pipette tip insertion path 52 formed between the guide surface 50 and the holding part 51 as shown in FIG. 9.

Additionally, the sample containing part 11A of the reagent cartridge according to the present embodiment can secure the distance between the tip of the pipette tip 31 from which the sample is discharged, and an inner wall 53 of the sample containing part 11A, by inserting the pipette tip 31 along the guide surface 50. Accordingly, it is possible to prevent the phenomenon in which the sample cannot be discharged to the sample containing part 11A, since the discharged sample is sucked up into the gap between the tip of the pipette tip 31 and the inner wall 53 of the sample containing part 11A by capillary action, when it is narrow between the tip of the pipette tip 31 and the inner wall 53 of the sample containing part 11A, and the sample can be positively discharged to the sample containing part 11A.

Note that, although it is preferable that the tip of the pipette tip 31 is inserted so that the distance to the liquid surface of the sample dilution solution contained in advance in the sample containing part 11A is such that the droplet tip substantially match a liquid surface a of the sample dilution solution as shown in FIG. 9, even when the droplet does not reach a liquid surface b of the sample dilution solution, the sample can be discharged sufficiently.

Additionally, since the sample containing part 11A of the reagent cartridge according to the present embodiment can hold the pipette tip 31 by the guide surface 50 and the holding part 51, it becomes possible to hold the pipette tip 31 after the discharging of the sample to the reagent cartridge.

### [Third Embodiment]

The case has been described where the sample containing part 11A of the reagent cartridge 10 according to the above-described second embodiment includes the holding part 51 at the predetermined interval from the guide surface 50. A description will be given of an example in which a reagent cartridge of a third embodiment, which will be described next, includes a sample containing part 11B having a different form from that in the second embodiment. Note that the members that are the same as or similar to those in the above-described first and second embodiments will be denoted by the same signs, and a description will be omitted.

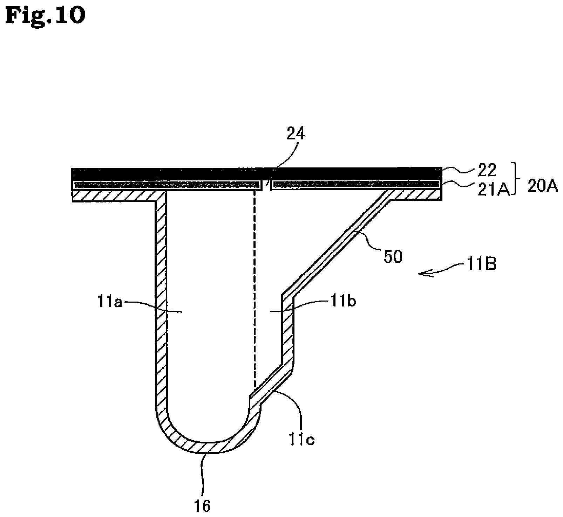

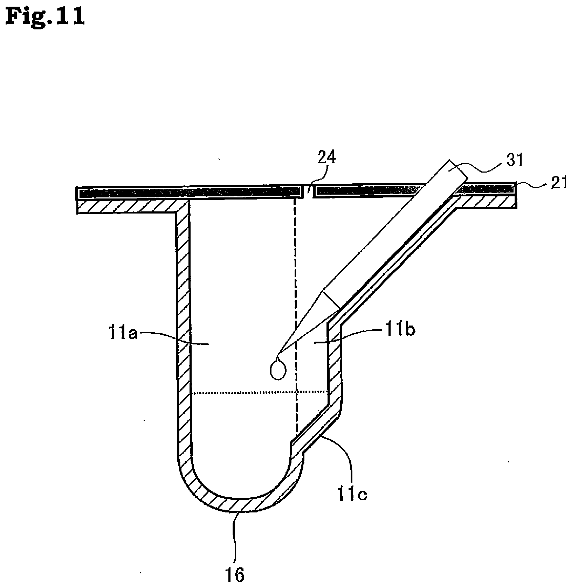

FIG. 10 is a cross-sectional view of a sample containing part of the reagent cartridge according to the third embodiment of the present invention, and FIG. 11 is a cross-sectional view showing a state of dispensing a sample to the reagent cartridge according to the third embodiment of the present invention.

As shown in FIG. 10, in the sample containing part 11B of the reagent cartridge according to the present embodiment, a closing part 20A is attached to an upper aperture of the sample containing part 11B, so that the sample dilution solution contained in the sample containing part 11B is not leaked at the time of transportation and the like.

The closing part 20A is attached to the aperture of the sample containing part 11B, and includes a first closing part 21A in which a second air vent hole 24 is formed at the position corresponding to the injection part 11b, and a second closing part 22 laminated on the first closing part 21A so as to close the second air vent hole 24 of the first closing part 21. It is preferable when the first closing part 21A and the second closing part 22 are configured by a membrane film material, and they are attached to each other with an adhesive or the like.

Additionally, in the sample containing part 11B of the reagent cartridge according to the present embodiment, the holding part 51 arranged with the predetermined interval from the guide surface 50 formed in the sample containing part 11A of the reagent cartridge according to the second embodiment is not formed, and the aperture of the injection part 11b is widely opened.

By not forming the holding part 51 in this manner, it becomes possible to easily and inexpensively manufacture a reagent cartridge according to the present embodiment by resin molding, by simplifying the structure of a metal mold at the time of manufacturing the reagent cartridge.

Note that when discharging the sample to the sample containing part 11B of the reagent cartridge according to the present embodiment, the pipette tip 31 can be held in the injection part 11b by peeling off the second closing part 22 in advance, and inserting the pipette tip 31 along the guide surface 50 so as to break through the first closing part 21A as shown in FIG. 11. Additionally, a mark (for example, an arrow, a circle, or the like) indicating the portion (for example, the position corresponding to the insertion path 52 of the second embodiment) at which the pipette tip 31 can break through may be provided in the first closing part 21A.

Note that, in this case, since the second air vent hole 24 is formed at the position corresponding to the injection part 11b in the first closing part 21A, the sample can be easily discharged from the pipette tip 31. Additionally, in the present embodiment, although the case has been described where the first closing part 21A and the second closing part 22 are laminated, the closing part 20A may not be formed by laminating layers, but may be formed in a single layer.

### [Fourth Embodiment]

The case has been described where the liquid suction part 11a and the injection part 11b are formed in the sample containing parts 11, 11A, and 11B in the reagent cartridge according to the above-described first to third embodiments. In a reagent cartridge of a fourth embodiment, which will be described next, an example will be described in which a sample containing part 11' has a different form from that in the first to third embodiments. Note that the members that are the same as or similar to those in the above-described first to third embodiments will be denoted by the same signs, and a description will be omitted.

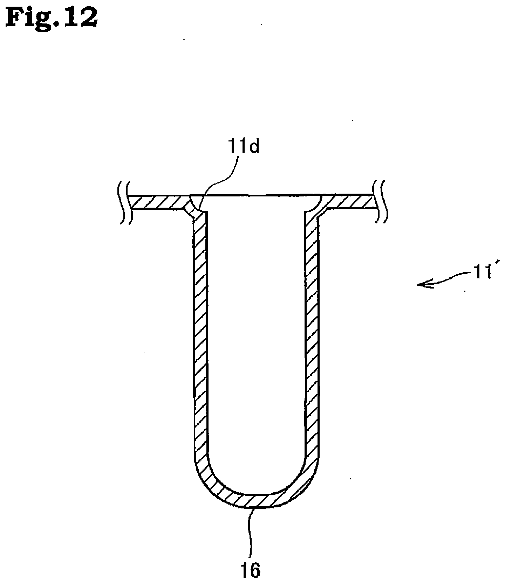

FIG. 12 is a cross-sectional view along a center line M of a sample containing part of the reagent cartridge according to the fourth embodiment of the present invention.

The sample containing part 11' according to the present embodiment includes an injection and liquid suction part that extends in the vertical direction, and serves as both an injection part and a liquid suction part, and an air venting part that extends in connection with the injection and liquid suction part. Note that the shape of the injection and liquid suction part is substantially the same shape as the liquid suction part 11a according to the above-described first embodiment to third embodiment, and the shape of the air venting part is substantially the same as the injection part 11b.

As shown in FIG. 12, it is preferable when a depression 11d is formed in an inner edge part of the upper end of the sample containing part 11', and at this time, the diameter of the depression 11d is formed to be smaller than the outer periphery shape of a body portion of the sample collection pipette 30, and is formed such that the sample collection pipette 30 is not inserted into the sample containing part 11' more than necessary at the time of dispensing. Additionally, it is preferable when the depression 11d is formed such that a body tip of the sample collection pipette 30 is engaged to be held in an easily detachable manner.

Additionally, since the air venting part communicates with the injection and liquid suction part, when the sample is dispensed from the sample collection pipette 30, it is possible to release the internal pressure of the sample containing part 11' to ensure dispensing.

Note that, since the injection and liquid suction part serves for both injection and liquid suction of the sample in the sample containing part 11' according to the present embodiment, after dispensing is completed, the sample collection pipette 30 engaged with the depression 11d is removed from the sample containing part 11'. Additionally, after the sample is injected, it is also possible to move the pipette tip 31 of the pipette 30 to be inserted into the air venting part, to separate the pipette tip 31 from the pipette 30 so that the pipette tip 31 remains in the air venting part, and to perform analysis while placing the pipette tip 31 in sample containing part 11'.

Note that the forming aspect of the inclined surface 11c described in the first embodiment can also be appropriately applied in the second to fourth embodiments. Additionally, the angle of the inclined surface 11c described in the first embodiment and the second embodiment can also be appropriately applied in the third and fourth embodiments.

Additionally, the distance between the tip of the pipette tip 31 and the liquid surface of the sample dilution solution contained in advance in the sample containing part 11A, which has been described in the second embodiment, can also be applied in the third embodiment.

Additionally, the distance between the tip of the pipette tip 31 and the liquid surface of the sample dilution solution contained in advance in the sample containing part 11, which has been described in the first embodiment, can also be applied in the fourth embodiment.

Additionally, the mark indicating the portion at which the pipette tip 31 breaks through, which has been described in the third embodiment, can also be applied in the first, second, and fourth embodiments.

Additionally, the closing part 20A described in the third embodiment can also be applied in the second embodiment. In addition, when the closing part 20A is applied to the third embodiment, the second air vent hole 24 may be formed at the position corresponding to the injection part 11b, or in the positions corresponding to both the injection part 11b and the liquid suction part 11a. Further, the closing part 20 described in the first embodiment can also be applied in the fourth embodiment.

In the first embodiment to the fourth embodiment, although the cases have been described where the inclined surface 11c is included, the sample containing part 11 may be formed by omitting the inclined surface 11c. When the width of the reagent cartridge according to the second or third embodiment in the lateral direction needs to be formed narrow, it becomes possible to provide the guide surface 50 by appropriately narrowing the widths of the liquid suction part 11a and the injection part 11b in the lateral direction of the reagent cartridge. Additionally, in the second embodiment and the third embodiment, although the cases have been described where the guide surface 50 extends in the direction that is substantially perpendicular to the center line M, the extending direction of the guide surface 50 may be formed to be inclined with respect to the center line M at a predetermined angle.

Note that, although the reagent cartridge 10 according to the above-described present embodiment is configured such that three chips 40 can be contained in the chip containing parts 15, the number thereof is not limited to this, and can be appropriately increased and decreased. It is obvious from the language of the claims that modes with such changes or improvements may also be included in the technical scope of the present invention.

### Reference Signs List

1 analysis apparatus, 2 operation panel, 3 installation door, 4 housing, 10 reagent cartridge, 11, 11A, 11B, 11' sample containing part, 11a liquid suction part, 11b injection part, 11c inclined surface, 11d depression, 12 antibody containing part, 13 reagent containing part, 14 washing solution containing part, 15 chip containing part, 15a coupling plate, 16 liquid reservoir part, 17 top surface part, 20, 20A closing part, 21, 21A first closing part, 22 second closing part, 23 air vent hole, 24 second air vent hole, 30 sample collection pipette, 31 pipette tip, 32 nipple, 40 chip, 50 guide surface, 51 holding part, 52 pipette tip insertion path, 53 inner wall.

## Claims

1. A reagent cartridge used for an analysis apparatus that analyzes a result based on a reaction of a sample and a reagent, the reagent cartridge comprising:
a sample containing part that contains the sample,
wherein the sample containing part includes an injection part and a liquid suction part.

2. The reagent cartridge according to claim 1,
wherein the injection part and the liquid suction part mutually extend in a vertical direction, an inclined surface that is inclined toward the liquid suction part is formed in a lower end of the injection part, and the inclined surface is continuous with the liquid suction part via a side surface of the liquid suction part.

3. The reagent cartridge according to claim 1 or 2,
wherein a guide surface that is inclined with respect to the vertical direction is formed in the injection part.

4. The reagent cartridge according to claim 3,
wherein the guide surface is formed in a side wall opposing the liquid suction part.

5. The reagent cartridge according to claim 3 or 4, comprising:
a holding part at a predetermined interval from the guide surface.

6. The reagent cartridge according to any one of claims 2 to 5,
wherein the inclined surface is inclined at 30 degrees to 60 degrees with respect to the vertical direction.

7. The reagent cartridge according to any one of claims 2 to 6,
wherein the inclined surface is continuously formed with a liquid reservoir part so as to form a part of the liquid reservoir part.

8. The reagent cartridge according to any one of claims 1 to 7,
wherein a sample dilution solution is contained in the sample containing part.

9. The reagent cartridge according to any one of claims 2 to 8,
wherein a liquid surface of the sample dilution solution is located between an upper end and a lower end of the inclined surface.

10. The reagent cartridge according to any one of claims 1 to 9, comprising:
at least one of a reagent containing part that contains the reagent, and an antibody containing part that contains an antibody.

11. The reagent cartridge according to claim 10,
wherein at least either one of the liquid reservoir part, and the reagent containing part and the antibody containing part is substantially arranged on an operation line of the analysis apparatus.

12. The reagent cartridge according to claim 10 or 11,
wherein a first closing part that closes at least one of the reagent containing part and the antibody containing part, and in which an air vent hole is formed at a position corresponding to at least one of the reagent containing part and the antibody containing part, and a second closing part that closes the air vent hole are laminated.

13. The reagent cartridge according to claim 12,
wherein the first closing part closes at least one of the liquid suction part or the injection part.

14. The reagent cartridge according to claim 13,
wherein a second air vent hole is formed at a position corresponding to the liquid suction part in the first closing part.

15. The reagent cartridge according to claim 13,
wherein a second air vent hole is formed at a position corresponding to the injection part in the first closing part.
